# EUROPÄISCHE PATENTSCHRIFT

(11) **EP 2 794 208 B1**
(45) Veröffentlichungstag und Bekanntmachung des Hinweises auf die Patenterteilung: **06.05.2020**
(21) Anmeldenummer: 12810284.5
(22) Anmeldetag: 20.12.2012
(51) Int. Cl.: B27B 21/00, B27B 17/00

(54) **SÄGEBANK**
SAW BENCH
BANC DE SCIE

(30) Priorität: 21.12.2011 DE 102011122524
(43) Veröffentlichungstag der Anmeldung: 29.10.2014
(73) Patentinhaber: Schambeck, Josef-Michael, 94365 Parkstetten (DE)
(72) Erfinder: Schambeck, Josef-Michael, 94365 Parkstetten (DE)
(74) Vertreter: Reichert & Lindner Partnerschaft Patentanwälte
(86) Internationale Anmeldenummer: PCT/EP2012/076516
(87) Internationale Veröffentlichungsnummer: WO 2013/092932

(56) Entgegenhaltungen:
- DE-A1- 10 224 277
- DE-A1-102007 001 271
- DE-U1- 8 715 727
- DE-U1- 20 107 973
- DE-U1- 29 914 395
- DE-U1- 29 921 782
- DE-U1-202009 014 060
- GB-A- 2 316 355

## Beschreibung

Die Erfindung betrifft eine Sägebank gemäß dem Oberbegriff des Anspruchs 1. Im Besonderen hat die Sägebank ein erstes Beinpaar und ein zweites Beinpaar, wobei zwischen dem erstem Beinpaar und dem zweiten Beinpaar mindesten zwei Quertraversen für Schnittgut vorgesehen sind. Jede Quertraverse besteht aus einem ersten flächigen Anlageelement und einem zweiten flächigen Anlageelement, die unter einem Winkel (α) zueinander angeordnet sind. Ein Sägeschlitz ist zwischen den Quertraversen ausgebildet.

Aus der deutschen Offenlegungsschrift DE 27 35 777 ist eine Holzsägebank mit verschiebbaren Zusatzstücken zum Sägen von Kurzholz offenbart. Die Zusatzstücke lassen sich getrennt oder zusammen nach links oder nach rechts verschieben, um somit eine Anlage für das zu schneidende Holz bereitzustellen. Eine Führung für eine Säge ist z.B. nicht gegeben.

Die deutsche Patenschrift DE 31 34 854 C2 offenbart einen zusammenklappbaren Sägebock, der zwei Paare, jeweils mit einem Gelenk verbundene, scherenförmig spreizbare Ständer aufweist, die durch wenigstens eine Querverbindung im Abstand miteinander verbunden sind. Zwischen den aufgespreizten Enden kann oberhalb der Gelenke das Holz oder das Werkstück zur Bearbeitung festgelegt werden. Das Gestell besitzt drei Standbeine.

Die deutsche Patenschrift DE 100 06 761 C2 offenbart einen Sägebock, der derart ausgestaltet ist, dass das Hantieren mit einer Kettensäge erleichtert und ein fachgerechtes und sicheres Ablängen von Brennholz aus gegebenen Holzlängen der Forstwirtschaft in verschiedene, gebräuchliche Scheitlängen ermöglicht. Hierzu hat der Sägebock zwei Standkreuze und dazwischen angeordnete Halte- oder Standkreuze. Die Stand- und Haltekreuze sind durch parallel verlaufende Querstreben formschlüssig verbindbar. Die oberen Holme der Stand- und Haltekreuze weisen mindestens auf einer Seite eine unterschiedliche Länge auf. Die längeren und kürzeren Holme sind jeweils wechselweise angeordnet.

Das deutsche Gebrauchsmuster DE 201 07 973 U1 beschreibt einen Holzsägebock mit einer Auflage für das zu sägende Holzstück, (z. B. Rundholz). Ferner sind Halterungselemente zur Sicherung des Holzstücks vorgesehen. Die Auflage ist in mehrere Teilbereiche unterteilt und nach oben leicht erhöht. Jeder Abstand, zwischen den benachbarten Teilbereichen weist eine Vertiefung auf, die dazu da ist, tiefer zu sägen, als das Rundholz dick ist. Beim Durchsägen des Holzes, fällt ein Teil des Holzes langsam auf die schräggeschnittene Auflage, ohne zu zwicken.

Die deutsche Gebrauchsmusterschrift DE 202 13 483 U1 offenbart einen Metall-Holzsägebock mit Gasfeder-Spannvorrichtung zum gefahrlosen Sägen von Holzstämmen bis 4 m Länge und mehr. Es sind vier untereinander verbundene Scherenböcke zur Aufnahme des zu zersägenden Holzstammes vorgesehen. Eine am vorletzen Bock angebrachte Gasfeder dient als Spannvorrichtung. Hierzu ist ein beweglicher Hebel vorgesehen. Das Holz wird fest eingespannt, indem der Hebel heruntergezogen wird. Die Scherenböcke sind durch Verbindungsbolzen zusammenklappbar.

Die deutsche Gebrauchsmusterschrift DE 296 03 645 U1 offenbart einen Sägebock aus wenigstens zwei zueinander beabstandeter, miteinander verbundener Sägebockelemente zum Einlegen eines Holzstoßes, von denen jeder jeweils über eine Einspanneinrichtung zum Verpressen des Holzes zu einem festen Bund verfügt. Mit dem Holzstoßsägebock kann Holz von etwa 5 bis 20 cm Stärke eingeschichtet, eingespannt und dann z.B. mit der Kettensäge oder mit anderen handelsüblichen Sägen von oben nach unten versetzt 5 bis 6 mal durchgesägt werden, ohne das Holz nachzuspannen. Auf diese Weise kann ohne fremde Hilfe eine Person allein Brennholz aus Ästen, Zweigen oder Stämmen z.B. kamin- bzw. ofengerecht zerkleinern, ohne einer erheblichen Verletzungsgefahr ausgesetzt zu sein.

Ein Holzsägebock, der dem Absägen einzelner Holzscheiben eines Baumstammes oder ähnlichem Hartholz dient, ist in der Gebrauchsmusterschrift DE 20 2004 005 124 U1 offenbart. Der Holzsägebock besteht aus der Mehrzahl von Trägern. Zwischen den einzelnen Trägern ist ein Zwischenraum vorgesehen. An den Trägerköpfen sind jeweils seitlich links und rechts des Baumstammes Führungslaschen angebracht, die mit der abgewandte Seite in einem ca. 45 ° Winkel vom Baumstamm oder Holz nach oben gehen, um eine flexible Fixierung unterschiedlicher Baumstamm-/Holzstärken zu gewährleisten.

Die deutsche Gebrauchsmusterschrift DE 299 21 782 U1 offenbart eine Bearbeitungsvorrichtung zur manuellen Zerkleinerung von Gartenabfällen mittels Handsäge. Die Bearbeitungsvorrichtung besteht aus einer Schneidlade und einer Auflagevorrichtung, wobei die Schneidlade aus zwei überwiegend als Siebflächen ausgebildeten Seitenteilen besteht, die längsseitig beweglich miteinander verbunden und in einem beliebigen Öffnungswinkel um die Drehachse zueinander verstellbar sind. An dem Seitenteil ist eine Schneidplatte und gegenüberliegend an dem Seitenteil ist ein Schneidspalt zur Führung der Handsäge angebracht.

Die deutsche Gebrauchsmusterschrift DE 299 14 395 U1 offenbart eine Sägebank gemäß dem Oberbegriff des Anspruchs 1, mit der das zu schneidende Kaminholz einfach in seiner Lage gesichert werden kann, die Abschnitte gleich lang sind, und die Handhabung der Säge in einer sicheren Weise erfolgt. Die Vorrichtung besteht aus einzelnen V-förmigen Aufnahmen, die auf einem kippbaren Gestell angeordnet sind. Zwischen den V-förmigen Aufnahmen ist eine Mulde vorgesehen, wobei der Abstand zur nächsten Mulde die gewünschte Abschnittslänge definiert. Im Boden der Mulde sind Holzklötze angebracht, damit die Kette der verwendeten Kettensäge nicht beim Durchrutschen beschädigt wird.

Die Aufgabe der vorliegenden Erfindung besteht darin, einen Sägebock zu schaffen, mit der die unterschiedlichsten Typen von Schnittgut zersägt werden können und dass das Zersägen für einen Benutzer der Sägebank sicher und störungsfrei durchführbar ist.

Die obige Aufgabe wird mit einer Sägebank gemäß den Merkmalen des Anspruchs 1 gelöst.

Bei der erfindungsgemäßen Sägebank besteht jede Quertraverse aus einem ersten flächigen Anlageelement und einem zweiten flächigen Anlageelement, die unter einem Winkel zueinander angeordnet sind. Ein Sägeschlitz ist zwischen zwei aufeinanderfolgenden Quertraversen ausgebildet. Um das Sägen zu erleichtern ist mindestens ein Führungselement für ein Sägemittel vorgesehen. Mit einem Führungsbolzen ist das Sägemittel im Führungselement gleitend geführt. Ferner ist das Führungselement derart an der Sägebank montiert, dass das Sägemittel beim Sägen des Schnittguts durch den Sägeschlitz unterhalb eins Niveaus des Schnittguts auf den mindestens zwei Quertraversen greift.

Die erste Führungsschiene ist am Rahmen rückwärtig zum ersten flächigen Anlageelement steckbar und somit sicherbar. Für ein sicheres Sägen kann ein Führungsbolzen, der mit dem Sägemittel verbunden ist, in der ersten Führungsschiene gleitend geführt werden. An der ersten Führungsschiene ist eine Haltegabel angebracht ist, an der das Sägemittel nach dem Sägen geparkt werden kann. Die zweite Führungsschiene kann am Rahmen und in einer Aufnahme an einem freien Ende des zweiten flächigen Anlageelements steckbar und sicherbar sein. Ein Führungsbolzen, der mit dem Sägemittel verbunden ist, ist in der zweiten Führungsschiene gleitend geführt. An der zweiten Führungsschiene ist eine Haltegabel angebracht, an der das Sägemittel parkbar ist.

Weiterhin kann eine Wippeinrichtung an den Rahmen und in eine Aufnahme an einem freien Ende des zweiten flächigen Anlageelements gesteckt und gesichert werden. Ein mit dem Sägemittel verbundener Führungsbolzen ist in einem Führungskanal der Wippeinrichtung gleitend geführt. An der Wippeinrichtung ist eine Haltegabel angebracht, an der das Sägemittel parkbar ist.

An einem freien Ende des ersten Anlageelements und/oder an einem freien Ende des zweiten flächigen Anlageelements ist jeweils mindestens eine Aufnahme angebracht, in die die Holzhalterungen steckbar sind. Jede Holzhalterung hat mindestens einen Zapfen ausgeformt, der zum Anbringen der Holzhalterung formschlüssig in die Aufnahme greift.

Die Beine des ersten Beinpaars und die Beine des zweiten Beinpaars sind jeweils derart starr miteinander verbunden, dass die Beine eines jeden Beinpaares einen spitzen Winkel einschließen. Die beiden Beinpaare sowie die Quertraversen für das Schnittgut sind starr an einem Rahmen der Sägebank befestigt. Der Rahmen der Sägebank kann mit vier starren Bodenstützen verbunden sein, die sich nicht in der Höhe verstellen lassen. Die Bodenstützen haben an den dem Boden gegenüberliegenden Enden Kufen montiert, so dass sich die Sägebank leichter bewegen lässt. Eine weitere Ausgestaltung ist, dass die vier Bodenstützen in der Höhe verstellt werden können, dies ermöglicht den Ausgleich von Bodenunebenheiten.

Mindestens ein Verlängerungsmodul kann mit dem Rahmen der Sägebank lösbar verbunden werden. Je nach Model sind an dem Verlängerungsmodul zwei starre Bodenstützen oder zwei in der Höhe verstellbare Bodenstützen angebracht.

Um den Komfort bei der Benutzung der Sägebank weiter zu erhöhen, kann ein Laufrad an die Sägebank angesteckt werden. Das Laufrad ist über eine Kurbel mechanisch in der Höhe verstellbar. Ebenso sind zwei Fahr-Griffe in entsprechende Aufnahmen am Rahmen für beide Fahrtsrichtungen einsteckbar. Damit die Fahr-Griffe beim Arbeiten mit der Sägebank nicht stören, könne die Fahr-Griffe in je einer entsprechenden Parkposition am Rahmen eingesetzt werden.

Am ersten flächigen Anlageelement und am zweiten flächigen Anlageelement sind auf einer Anlagefläche für das Schnittgut jeweils mehrere Sicherungselemente angebracht, damit ein Verrutschen des Schnittguts verhindert ist.

Die Grundidee der erfindungsgemäßen Multifunktions-Sägebank erlaubt den Ausbau in mehreren Ausführungen mit unterschiedlichen Arbeitslängen. Das Model "Einsteiger" misst 800 mm, das Model "Standard" misst 1000 mm und das Model "Profi" verfügt über eine Arbeitslänge von 1300 mm. Die Auflage für das zu sägende Brennholz (maximaler Durchmesser 33 Zentimeter) bzw. Schnittgut bilden Quertraversen, die auf einem stabilen Rahmen aus Vierkantrohr aufgeschweißt sind. Quertraversen sind unterschiedlich breit und durch Sägeschlitze (Breite ca. 10 Zentimeter) voneinander getrennt. Der Benutzer sägt das Schnittgut mit einer Motor- oder auch Elektrosäge von oben senkrecht durch und richtet dabei den Schnitt nach einem der Sägeschlitze. Diese sind so angeordnet, dass der Benutzer beim Sägen mit dem Sägemittel das Schnittgut komplett durchsägt und aufgrund der Sägeschlitze mit dem Sägemittel im Wesentlichen unter das Niveau des auf den Quertraversen liegenden Schnittguts gelangt.

Damit das Holz bzw. Schnittgut vor oder nach dem Zersägen von der Sägebank purzelt, befinden sich zu beiden Seiten der durch die Quertraversen gebildeten Holzauflage mehrere Holzhalterungen, die ebenfalls aus einem Vierkantrohr gebildet sind. Diese Holzhalterungen können in den Rahmen des Sägebocks eingesteckt werden. Die Holzhalterungen können auch beliebig umgesteckt werden, aber auch unterhalb der Holzauflage in dafür vorgesehenen Elementen zwischengeparkt werden. So bleiben sie stets an der Sägebank verfügbar und können, über Bolzen gesichert, nicht verloren gehen. Die Holzhalterungen sind nicht nur zum Bündeln von Holzscheiten, sondern auch für Äste, Rundholz oder Bretter geeignet. Auch krummes Holz kann mit dem erfindungsgemäßen Sägebock gebändigt werden. Drehsicherungen verhindern ein Wegdrehen insbesondere von Rundholz beim Durchsägen. Hinzu kommt, dass das durchgesägte Holz auf der Sägebank als Paket liegen bleibt und kann als Ganzes abgenommen werden.

Damit der Benutzer nicht freihändig sägen muss, wird die Säge über mindestens eine Führungsschiene am Rahmen der Sägebank eingesetzt. Somit kann ein Verkannten des Sägemittels oder ein Sägen in die Quertraversen verhindert werden. Die Führungsschienen verlaufen leicht schräg nach innen, was den Sägeablauf erleichtert und die natürliche Sägebewegung unterstützt. Ein Führungsbolzen, der z.B. eine Kettendeckelmutter einer Kettensäge ersetzt, sorgt für die nötige Führung der Kettensäge in der Führungsschiene.

Ein weiterer Vorteil der Führungsschienen, dass sie das jeweilig zu schneidende Maß an den Sägeschlitzen markieren. Die steckbaren Führungsschienen dagegen markieren den richtigen Schlitz eindeutig und unübersehbar. Für die bessere Unterscheidung sind zudem alle steckbaren, sprich abnehmbaren, Bauteile an der Sägebank in der Signalfarbe Orange lackiert. Hinzu kommt, dass nach jedem Sägen die Säge in einer Halterung, die der Führungsschiene nachgeschaltet ist, eingehängt werden kann und somit aufgeräumt ist.

Damit die Sägebank leicht transportabel ist, ist ein Fahrwerk vorgesehen, das aus einem Laufrad besteht und das über eine Kurbel mechanisch in der Höhe verstellt werden kann. Mit der Verstellung des Laufrads kann eine Bodenfreiheit von bis zu 25 Zentimetern bereitgestellt werden. Das Laufrad kann an beiden Seiten der Sägebank angesteckt werden. Ebenfalls könne in beide Fahrtsrichtungen jeweils zwei Fahr-Griffe angesteckt werden, welche auch am Rahmen der Sägebank parkbar sind.

Die Arbeitsläge einer jeden Sägebank kann mit Verlängerungsmodulen erweitert werden. Jedes Verlängerungsmodul kann über drei Steckverbindungen an die zu verlängernde Sägebank angedockt werden. Ebenso ist es möglich dass die Sägebank mit vier in der Höhe verstellbaren Stützen versehen ist, um so Geländeunebenheiten auszugleichen. Ein Sägen mit einer Bügelsäge, also mit reiner Muskelkraft ist ebenfalls möglich. Die Bügelsäge kann beim Schneiden an einer der Führungsschienen geführt werden.

Weitere Vorteile und vorteilhafte Ausgestaltungen der Erfindung sind Gegenstand der nachfolgenden Figuren sowie deren Beschreibungsteile.

Es zeigen im Einzelnen:
- **Figur 1**: eine Seitenansicht einer Ausführungsform der erfindungsgemäßen Sägebank;
- **Figur 2**: eine Draufsicht auf die in Fig. 1 dargestellte Ausführungsform der erfindungsgemäßen Sägebank;
- **Figur 3**: eine Seitensicht der erfindungsgemäßen Sägebank;
- **Figur 4**: eine Seitenansicht der in Fig. 1 dargestellten Ausführungsform mit einem Verlängerungsmodul für die Sägebank;
- **Figur 5**: eine Seitenansicht einer weiteren Ausführungsform der erfindungsgemäßen Sägebank;.
- **Figur 6**: eine Draufsicht auf die in Fig. 5 dargestellte Ausführungsform der erfindungsgemäßen Sägebank;
- **Figur 7**: eine Seitenansicht einer zusätzlichen Ausführungsform der erfindungsgemäßen Sägebank;
- **Figur 8**: eine Draufsicht auf die in Fig. 7 dargestellte Ausführungsform der erfindungsgemäßen Sägebank;
- **Figur 9**: eine Draufsicht auf die in Fig. 5 dargestellte Ausführungsform der erfindungsgemäßen Sägebank, wobei Verlängerungsmodule zur Verlängerung der Sägebank vorgesehen sind;
- **Figur 10**: eine Draufsicht auf die in Fig. 7 dargestellte Ausführungsform der erfindungsgemäßen Sägebank, wobei Verlängerungsmodule zur Verlängerung der Sägebank vorgesehen sind;.
- **Figur 11**: eine Seitenansicht einer Ausführungsform der erfindungsgemäßen Sägebank, die mit einem Laufrad und Fahr-Griffen versehen ist;
- **Figur 12**: eine Draufsicht auf die in Fig. 11 dargestellte Ausführungsform der erfindungsgemäßen Sägebank;
- **Figur 13**: eine Frontansicht derjenigen Seite der Sägebank, an der die FahrGriffe anzubringen sind;
- **Figur 14**: eine Frontansicht derjenigen Seite der Sägebank, an der das Laufrad angebracht ist;
- **Figur 15**: eine Draufsicht auf eine weitere, fahrbare Ausführungsform der Sägebank, wobei zur Verlängerung der Sägebank zwei Verlängerungsmodule vorgesehen sind;
- **Figur 16**: ein Frontansicht der der erfindungsgemäßen Sägebank mit angesteckten Holzhalterungen zur Sicherung und Fixierung des Schnittguts;
- **Figur 17**: eine Frontansicht der erfindungsgemäßen Sägebank aus Fig. 16 mit eingelegtem Schnittgut;
- **Figur 18**: eine Frontansicht der der erfindungsgemäßen Sägebank mit eingelegtem Schnittgut in Form von Rundhölzern;
- **Figur 19**: eine Seitensicht der in Fig. 18 gezeigten Darstellung, wobei der Rundholzstapel an mehreren Stellen durchtrennt ist;
- **Figur 20**: eine weitere Möglichkeit der Anbringung desSägemittels;
- **Figur 21**: die Position des Sägemittels nach dem Durchtrennen des Rundholzstapels;
- **Figur 22**: die Anbringung einer Zusatzsägebank an der erfindungsgemäßen Sägebank;
- **Figur 23**: eine Wippeinrichtung für ein Sägemittel, die an die Sägebank angesteckt werden kann;
- **Figur 24**: eine zusätzliche Holzhaltegabel, die an der Sägebank anbringbar ist;
- **Figur 25**: die Wippeinrichtung an der Sägebank, wobei das Sägemittel in der Parkposition ist;
- **Figur 26**: eine Handsäge, die in einer ersten Führungsschiene der Sägebank geführt ist;
- **Figur 27**: eine Seitenansicht der Sägebank, wobei an unterschiedlichen Haltebügeln die Sägemittel geparkt sind;
- **Figur 28**: eine Ansicht einer auf der Sägebank montierten Reisigpresse;
- **Figur 29**: ein in der Höhe verstellbare Bodenstütze;
- **Figur 30**: ein Laufrad, das ebenfalls in der Höhe verstellbar ist.
- **Figur 31**: eine Seitenansicht einer ersten Führungsschiene;
- **Figur 32**: eine Draufsicht auf die erste Führungsschiene;
- **Figur 33**: eine Seitenansicht einer zweiten Führungsschiene;
- **Figur 34**: eine Draufsicht auf die zweite Führungsschiene;
- **Figur 35**: eine Seitenansicht des Führungsbolzens;
- **Figur 36**: eine Frontansicht des Führungsbolzens;
- **Figur 37**: eine Seitenansicht der Wippeinrichtung;
- **Figur 38**: eine Seitenansicht einer einhängbaren Zusatzsägebank;
- **Figur 39**: eine Seitenansicht der Holzhaltegabel;
- **Figur 40**: eine Seitenansicht einer Ausführungsform einer steckbaren Holzhalterung; und
- **Figur 41**: eine Seitenansicht einer weiteren Ausführungsform einer steckbaren Holzhalterung.

Für gleiche oder gleich wirkende Elemente der Erfindung werden identische Bezugszeichen verwendet. Die dargestellten Ausführungsbeispiele stellen lediglich Ausführungsformen dar, die wie ein Sägebank (Multifunktions-Sägebank) ausgestaltet sein kann. Es ist für einen Fachmann selbstverständlich, dass die hier dargestellten Ausführungsformen lediglich eine Auswahl aus verschieden Möglichkeiten ist, wie die erfindungsgemäße Sägebank ausgestaltet sein kann. Hinzu kommt, dass die Sägebank mit einer Vielzahl von weiteren Zusatzteilen ausgestalten werden kann, die das Anwendungsspektrum der Sägebank erweitern.

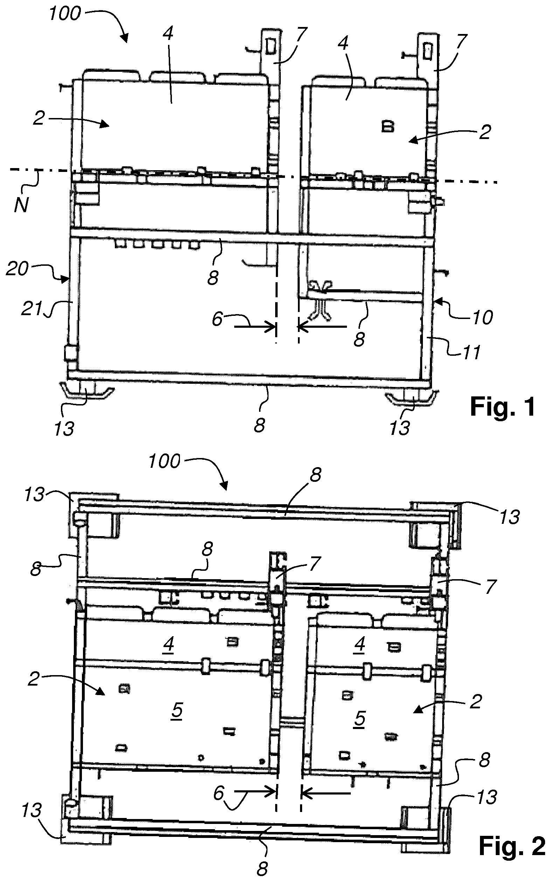

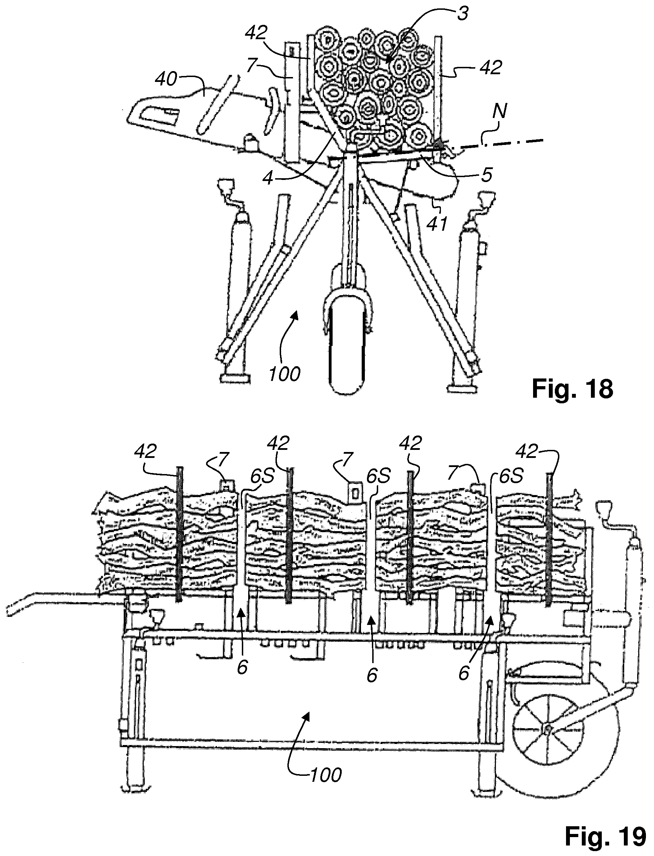

Wie aus der Seitenansicht einer Ausführungsform der erfindungsgemäßen Sägebank 100 gemäß **Figur 1** zu erkennen ist, besteht die Sägebank 100 aus einem ersten Beinpaar 10 und einem zweiten Beinpaar 20. Das erste Beinpaar 10 und das zweite Beinpaar 20 sind über einen Rahmen 8 starr verbunden. Zwischen dem erstem Beinpaar 10 und dem zweiten Beinpaar 20 sind mindesten zwei Quertraversen 2 angeordnet, auf denen das Schnittgut 3 (siehe Fig. 18) zu liegen kommt. Die Quertraversen 2 sind durch einen Sägeschlitz 6 voneinander getrennt. Der Sägeschlitz 6 ermöglicht es dem Sägemittel 40, dass dieses beim Sägen des Schnittguts 3 durch den Sägeschlitz 6 hindurchgreifen kann und so unterhalb ein Niveaus N des Schnittguts 3 gelangt, das auf den mindestens zwei Quertraversen 2 auf- und/oder anliegt.

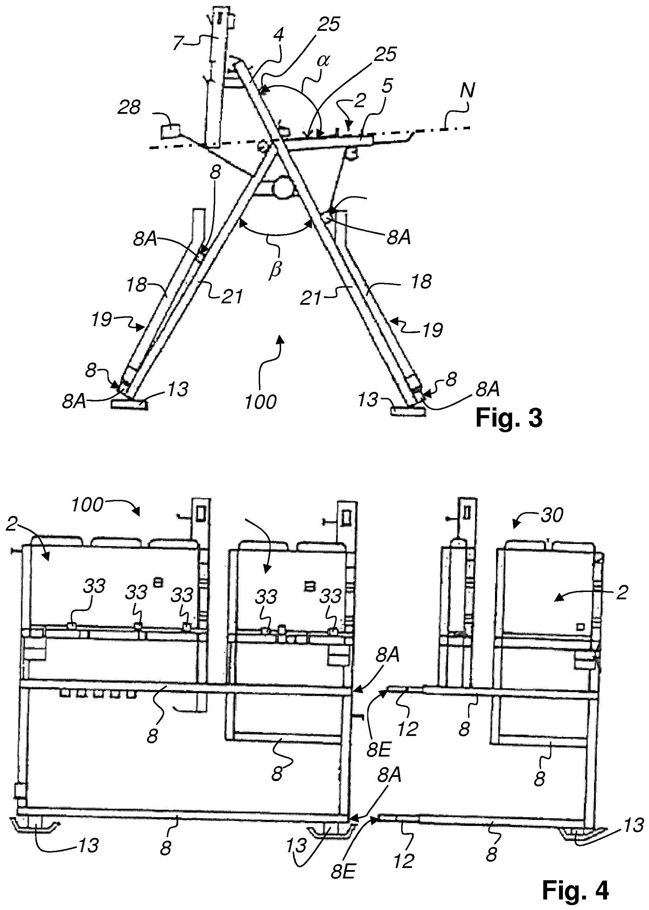

In **Figur 2** ist eine Draufsicht auf die in Fig. 1 dargestellte Ausführungsform der erfindungsgemäßen Sägebank 100 wiedergegeben. Jede Quertraverse 2 besteht aus einem ersten flächigen Anlageelement 4 und einem zweiten flächigen Anlageelement 5. Das ersten flächige Anlageelement 4 und das zweite flächige Anlageelement 5 sind, wie aus **Figur 3** zu erkennen ist, unter einem Winkel α zueinander angeordnet.

In **Figur 1**, **Figur 2** und **Figur 3** sind zwei erste Führungsschienen für ein Sägemittel 40 (siehe z.B. Fig. 18) derart an der Sägebank 100 montiert, dass das Sägemittel 40 beim Sägen des Schnittguts 3 durch den Sägeschlitz 6 greifen kann. Das Sägemittel 40 gelangt somit unterhalb das Niveau N des Schnittguts 3. Die ersten Führungsschienen 7 sind an den Rahmen 8 und rückwärtig zum jeweiligen ersten flächigen Anlageelement 4 angesteckt und gesichert. An der ersten Führungsschiene 7 ist eine Haltegabel 28 angebracht, an der das Sägemittel 40 geparkt werden kann. Bei der in Figur 3 gezeigten Darstellung ist das zweite Beinpaar 20 zu sehen. Die Beine 21 des zweiten Beinpaars 20 schließen einen spitzen Winkel β ein. Zwei Fahr-Griffe 18 sind in eine entsprechende Parkposition 19 am Rahmen 8 eingesetzt. Bei der hier dargestellten Ausführungsform sind am Rahmen 8 der Sägebank 100 vier starre Bodenstützen 13 angebracht. Diese Bodenstützen 13 können nicht in der Höhe verstellt werden. Das den Boden berührende Ende der Bodenstützen 13 ist kufenförmig ausgestaltet, so dass die Sägebank 100 leicht über den Boden geschoben werden kann. Auf der Seite des ersten flächigen Anlageelements 4 und/oder auf der Seite des zweiten flächigen Anlageelements 5 an der das Schnittgut 3 zu liegen kommt, sind Sicherungselemente 25 angebracht. Die Sicherungselemente 25 verhindern ein Verrutschen des Schnittguts 3 während des Sägens.

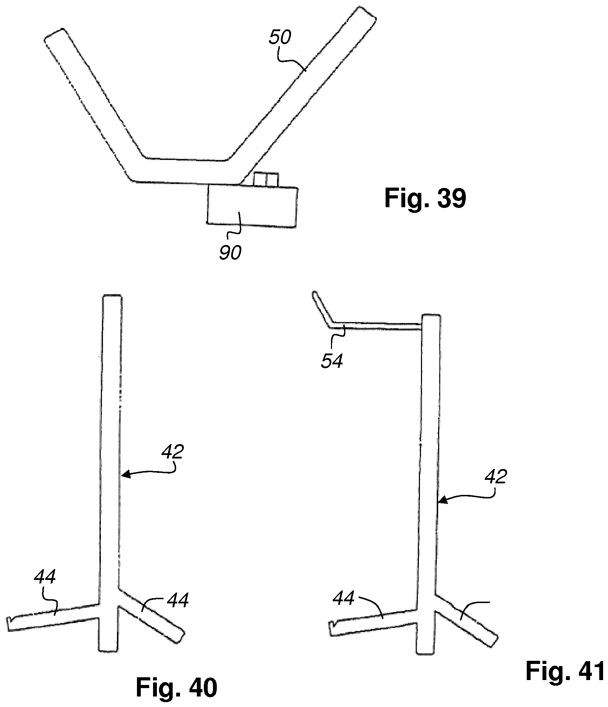

**Figur 4** zeigt eine Seitensicht der erfindungsgemäßen Sägebank 100, der ein Verlängerungsmodul 30 zugeordnet ist. Das Verlängerungsmodul 30 besitzt ebenfalls einen Rahmen 8 der an freien Enden 8E des Rahmens 8 die jeweils eine Steckverbindung 12 ausgeformt haben, die in entsprechende Aufnahmen 8A (siehe z.B. Figur 3) des Rahmen 8 formschlüssig eingreifen. Das Verlängerungsmodul 30 kann z.B. mit einem herkömmlichen Sicherungsstift an der Sägebank 100 gesichert werden. Auf dem Verlängerungsmodul 30 ist eine Quertraverse 2 montiert. Ebenso ist eine erste Führungsschiene 7 vorgesehen die dem Sägeschlitz 6 zugeordnet ist. Jeder der Verlängerungsmodule 30 hat zwei Bodenstützen 13, die in der hier dargestellten Ausführungsform als starre Bodenstützen 13 ausgebildet sind. An den Quertraversen 2 sind ebenfalls Aufnahmen 33 vorgesehen, die Holzhalterungen 42 (siehe Fig. 40 und 41) haltern.

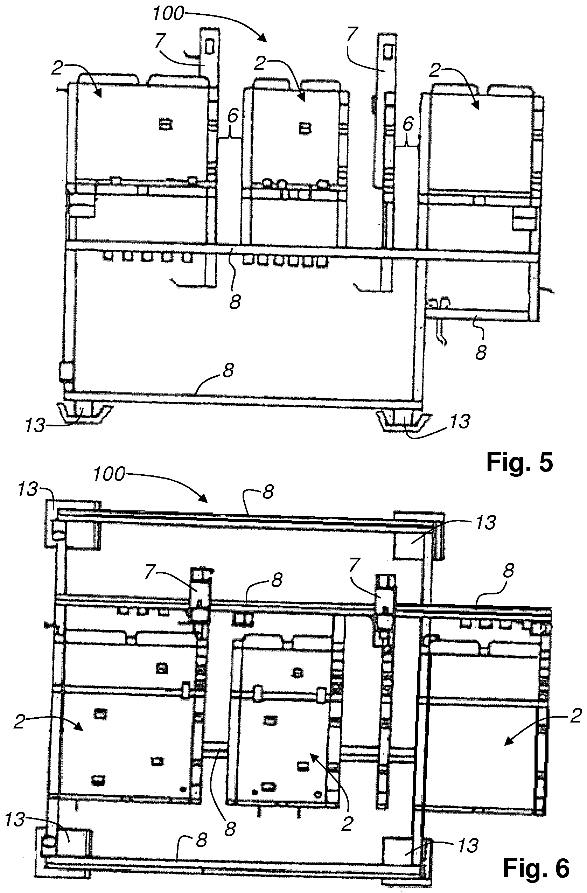

**Figur 5** zeigt eine Seitenansicht einer weiteren Ausführungsform der erfindungsgemäßen Sägebank 100. Die Sägebank 100 hat drei Quertraversen 2, die fest mit dem Rahmen 8 der Sägebank 100 verbunden sind. Wie in der Beschreibung zu den vorangehenden Ausführungsbeispielen bereits erläutert, sind zwischen den Quertraversen 2 die Sägeschlitze 6 ausgebildet. Jedem der Sägeschlitze 6 ist eine erste Führungsschiene 7 zugeordnet. **Figur 6** zeigt eine Draufsicht auf die weitere Ausführungsform der erfindungsgemäßen Sägebank 100 aus Fig. 5. Hier ist zu erkennen, dass diese Ausführungsform vier Bodenstützen 13 besitzt und ein starrer Rahmen 8 die Quertraversen 2 und die ersten Führungsschienen 7 trägt.

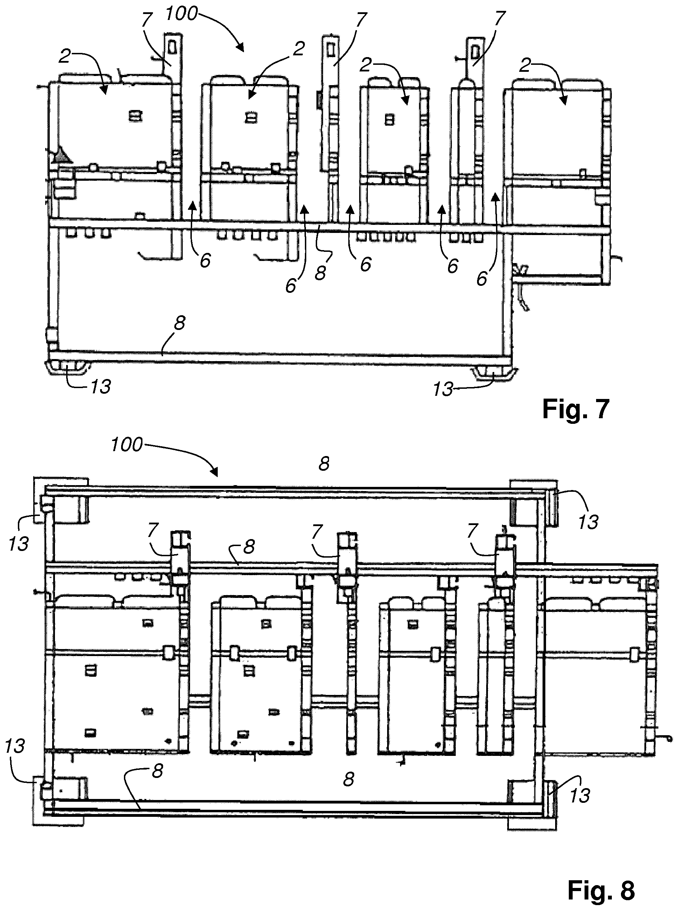

Die **Figur 7** und die **Figur 8** zeigen eine weitere Ausführungsform der erfindungsgemäßen Sägebank 100. Die Sägebank 100 hat vier Quertraversen 2, die fest mit dem Rahmen 8 der Sägebank 100 verbunden sind. zwischen den Quertraversen 2 die Sägeschlitze 6 ausgebildet. Jedem der Sägeschlitze 6 ist eine erste Führungsschiene 7 zugeordnet. Die in **Figur 8** dargestellte Draufsicht auf die weitere Ausführungsform der erfindungsgemäßen Sägebank 100 zeigt, dass diese vier Bodenstützen 13 besitzt. Der starre Rahmen 8 trägt die vier Quertraversen 2 und drei der ersten Führungsschienen 7.

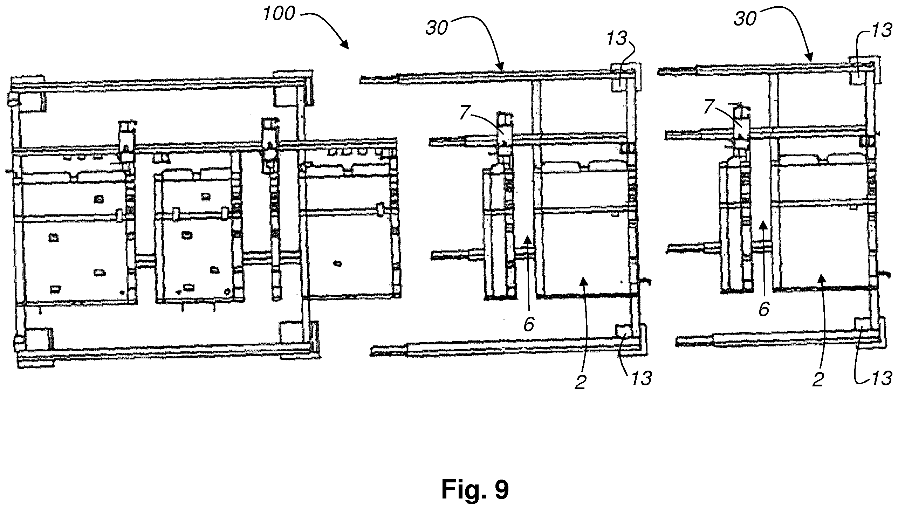

**Figur 9** ist eine Draufsicht auf die in Fig. 5 dargestellte Ausführungsform der erfindungsgemäßen Sägebank 100, wobei mehrere Verlängerungsmodule 30 zur Verlängerung der Sägebank 100 mit dieser lösbar verbindbar sind. Wie bereits in der Beschreibung zu Figur 4 erwähnt ist auf jedem Verlängerungsmodul 30 eine Quertraverse 2 montiert. Ebenso ist auf jedem Verlängerungsmodul 30 eine erste Führungsschiene 7 vorgesehen die dem Sägeschlitz 6 zugeordnet ist. Jedes der Verlängerungsmodule 30 hat zwei Bodenstützen 13, die in der hier dargestellten Ausführungsform als starre Bodenstützen 13 ausgebildet sind.

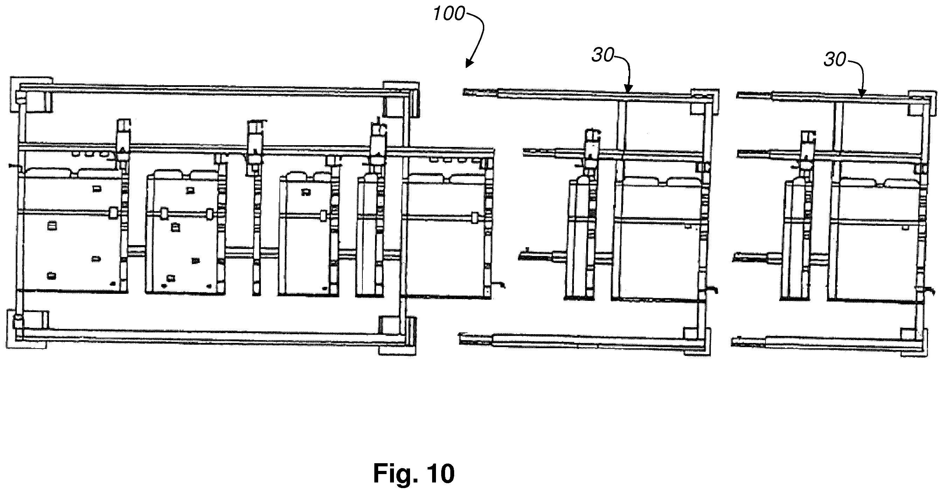

**Figur 10** zeigt eine Draufsicht auf die in Fig. 7 dargestellte Ausführungsform der erfindungsgemäßen Sägebank 100, wobei mehrere Verlängerungsmodule 30 zur Verlängerung der Sägebank 100 mit dieser lösbar verbindbar sind. Die Ausgestaltung der Verlängerungsmodule 30 ist analog zur der Beschreibung zu Fig. 4 und Fig. 9, so dass der übersichthalber auf eine Beschreibung und zusätzliche Bezugszeichen verzichtet werden kann.

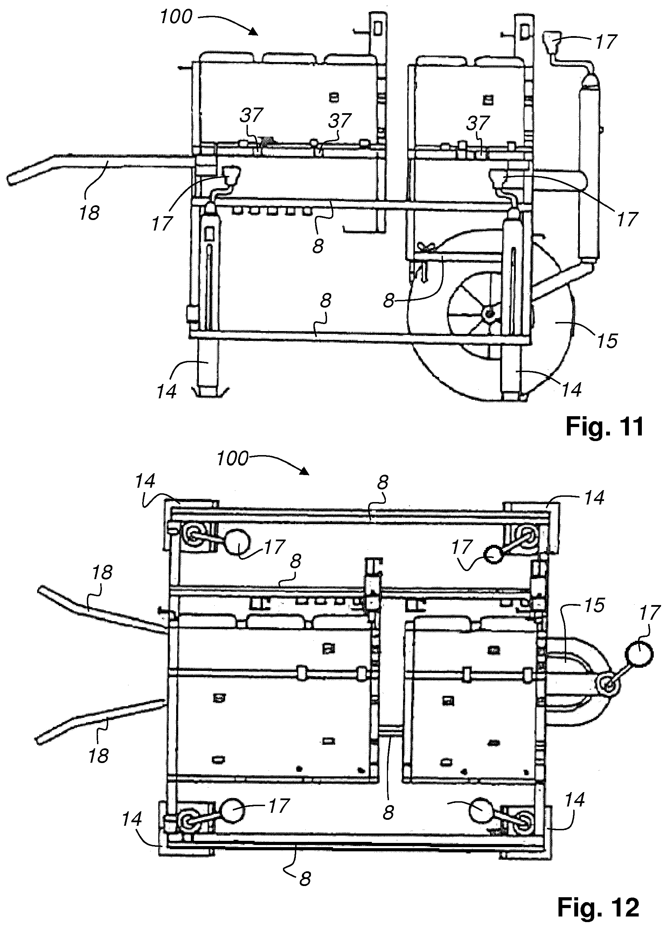

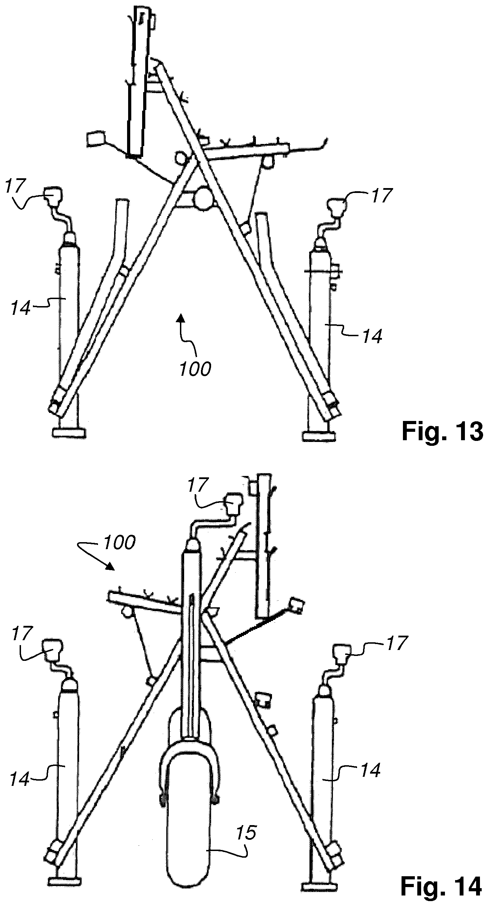

Verschiedene Ansichten der Ausführungsform einer fahrbaren Sägebank 100 sind in **Figur 11**, **Figur 12**, **Figur 13** und **Figur 14** dargestellt. Der Aufbau der hier dargestellten Sägebank 100 ist mit dem Aufbau der in Figur 1 beschriebenen Sägebank 100 identisch. Die Sägebank 100 kann zum leichteren Transport mit einem Laufrad 15 versehen werden und. Das Laufrad 15 ist über eine Kurbel 17 mechanisch in der Höhe verstellbar. Ebenso sind Fahr-Griffe 18 vorgesehen, mittels derer die Sägebank 100 vom Benutzer zu einem anderen Ort bewegt werden kann. Die Fahr-Griffe 18 und das Laufrad 15 sind mit dem Rahmen 8 steckbar/verbindbar. Der Rahmen 8 hat hierzu Aufnahmen 8A ausgebildet, mit denen die Fahr-Griffe 18 und das Laufrad 15 formschlüssig zusammenwirken. Mit dem Rahmen 8 sind vier in der Höhe verstellbare Bodenstützen 14 verbunden. Die Verstellung der Bodenstützen 14 erfolgt jeweils über eine Kurbel 17.

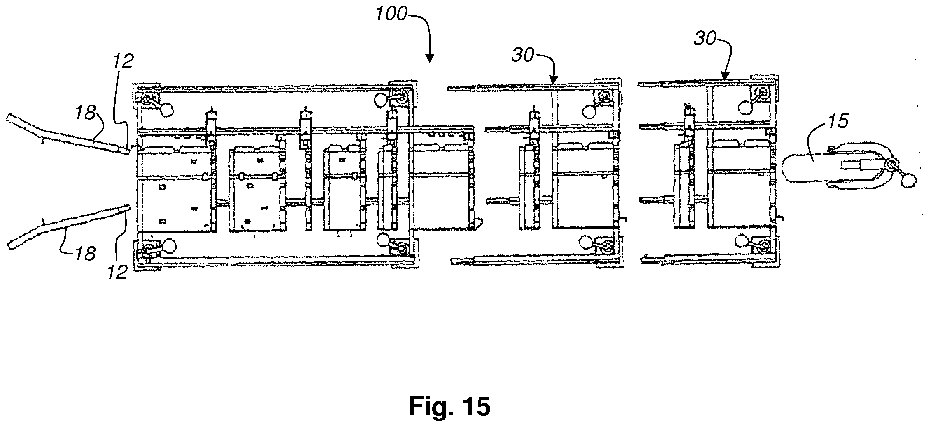

**Figur 15** zeigt eine Draufsicht auf eine weitere, fahrbare Ausführungsform der erfindungsgemäßen Sägebank100. Die Sägebank 100 entspricht im Aufbau der in Figur 8 dargestellten Sägebank 100. Zur Verlängerung der Sägebank 100 sind zwei Verlängerungsmodule 30 vorgesehen. Die Art und Weise der Verbindung der Verlängerungsmodule 30 mit der Sägebank 100 ist bereits in der vorangehenden Beschreibung beschrieben worden. Die Fahr-Griffe 18 sind mit der Sägebank 100 lösbar/verbindbar. Hierzu haben die Fahr-Griffe 18 jeweils eine Steckverbindung 12 ausgeformt. Das Laufrad 15 wird mit dem letzten Verlängerungsmodul 30 in einer Kette von Verlängerungsmoduln 30 verbunden.

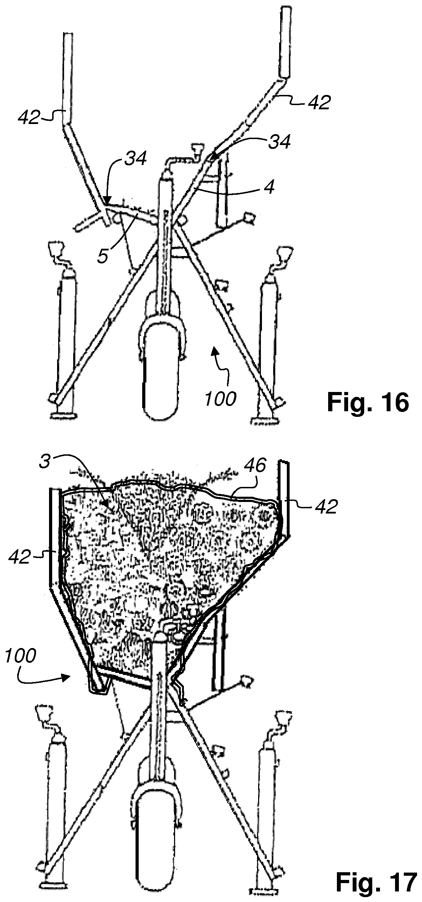

**Figur 16** und **Figur 17** zeigen jeweils Frontansichten der erfindungsgemäßen Sägebank 100, wobei Holzhalterungen 42 angesteckt sind, um die Menge bzw. das Volumen des auf der Sägebank 100 aufliegenden Schnittguts 3 zu erhöhen. Gleichzeitig soll mittels der Holzhalterungen 42 eine Sicherung und Fixierung des Schnittguts erreicht werden. Mindestens eine Holzhalterung 42 ist steckbar mit einem freien Ende 34 des ersten flächigen Anlageelements 4 und mindestens eine weitere Holzhalterung 42 ist steckbar mit einem freien Ende 36 des zweiten flächigen Anlageelements 5 verbindbar. Hierzu ist jeweils mindestens eine Aufnahme 37 (siehe z.B. Fig. 11) angebracht, in die die Holzhalterungen 42 formschlüssig steckbar sind. Zur besseren Fixierung des Schnittguts 3 auf der Sägebank 100 ist mindestens ein elastisches Mittel 46 vorgesehen, das über den Stapel an Schnittgut 3 spannbar ist.

**Figur 18** zeigt eine Frontansicht der der erfindungsgemäßen Sägebank 100 mit eingelegtem Schnittgut 3, das aus Rundhölzern besteht. Andere Holzhalterungen 42 sind dem ersten flächigen Anlageelement 4 bzw. dem zweiten flächigen Anlageelement 5 zugeordnet. Das in der Führungsschiene 7 geführte Sägemittel 40 ist eine Kettensäge, mit der der Stapel an Rundhölzern durchgeschnitten worden ist. Zumindest ein Teil des Sägeblatts 41 der Kettensäge befindet sich unterhalb des Niveaus N des zweiten flächigen Anlageelements 5. Eine Seitensicht der Darstellung aus Fig. 18, ist in **Figur 19** dargestellt. Hier ist zu erkennen, dass der Rundholzstapel an mehreren Stellen durchtrennt ist. Eine Vielzahl von Holzhalterungen 42 fixiert auch den an mehreren Stellen durchtrennten Holzstapel. Die Schnittstellen 6S liegen jeweils im Bereich der Sägeschlitze 6 und neben den Führungsschienen 7 für das Sägemittel 40. Somit bleiben die durchtrennten Holzstapel nach dem Durchtrennen auf der Sägebank 100 liegen.

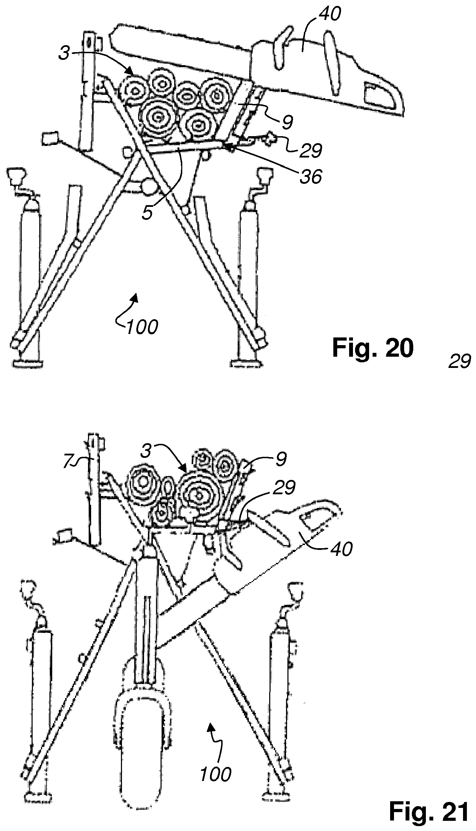

**Figur 20** zeigt eine weitere Möglichkeit der Anbringung des Sägemittels 40 an der Sägebank 100. Das Sägemittel 40 ist in einer zweiten Führungsschiene 9 geführt, die an den Rahmen 8 und in eine Aufnahme 33 an einem freien Ende 36 des zweiten flächigen Anlageelements 5 steckbar und sicherbar ist. Die Situation nach dem Schneiden mit dem Sägemittel 40 ist in **Figur 21** dargestellt. Ein Führungsbolzen (hier nicht dargestellt) ist mit dem Sägemittel 40 verbunden. Damit ist das Sägemittel 40 in der zweiten Führungsschiene 9 gleitend geführt. An der zweiten Führungsschiene 9 ist eine Haltegabel 29 angebracht mit der das Sägemittel 40 nach dem Durchtrennen des Holzstapels geparkt werden kann.

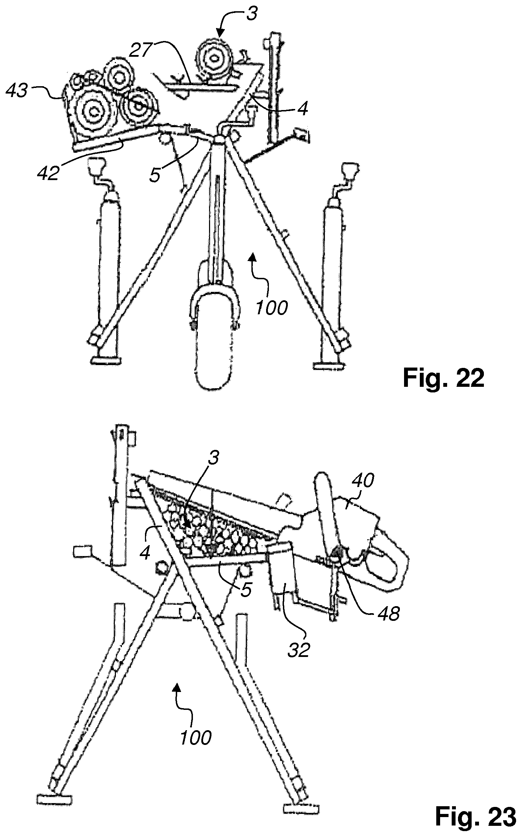

In **Figur 22** ist die Anbringung einer Zusatzsägebank 27 an der erfindungsgemäßen Sägebank 100 dargestellt. Die Zusatzsägebank 27 ist mit dem ersten flächigen Anlageelement 4 gesteckt verbunden. Auf der Zusatzsägebank 27 liegt bereits Schnittgut 3, das geschnitten werden soll. Mit dem zweiten flächigen Anlageelement 5 ist eine Holzhalterung 42 steckbar verbunden. Die Holzhalterung 42 hat einen Anschlag 43 ausgebildet, so dass auf der Holzhalterung mehrere Holzstücke geparkt werden können, um diese einzeln für den Sägevorgang zu entnehmen.

**Figur 23** zeigt eine Wippeinrichtung 32 für ein Sägemittel 40. Die Wippeinrichtung 32 ist am zweiten flächigen Anlageelement 5 an die Sägebank 100 angesteckt. Das zu schneidende Schnittgut 3 liegt an dem ersten flächigen Anlageelement 4 und dem zweiten flächigen Anlageelement 5 an. Die Wippeinrichtung 32 und ein Sicherungsbolzen 48 gewährleisten für motorisch, hydraulisch oder pneumatisch betriebene Sägemittel 40 einen sicheren Durchsägevorgang. Nach dem Durchsägen bleiben die Hölzer auf der Sägebank 100 liegen und ein Abrutschen des Schnittguts 3 ist vermeiden.

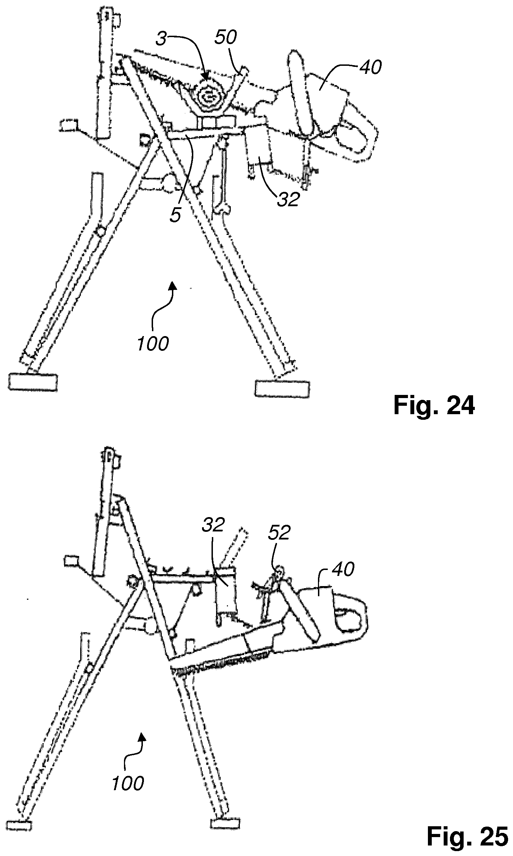

**Figur 24** zeigt eine zusätzliche Holzhaltegabel 50, die an der Sägebank 100 anbringbar ist. Die Wippeinrichtung 32 für das Sägemittel 40 ist am zweiten flächigen Anlageelement 5 angesteckt. Die Holzhaltegabel 50 sichert das aufgelegte Schnittgut 3. Die Wippeinrichtung 32 führt das Sägemittel 40.

**Figur 25** zeigt das Sägemittel 40 in einer Parkposition 52 der Wippeinrichtung 32. Die Parkposition 52 ermöglicht ein einfaches Entnehmen des Sägemittels 40 für einen weiteren Sägevorgang. Das Sägemittel 40 ist unmittelbar an der Sägebank 100 geparkt.

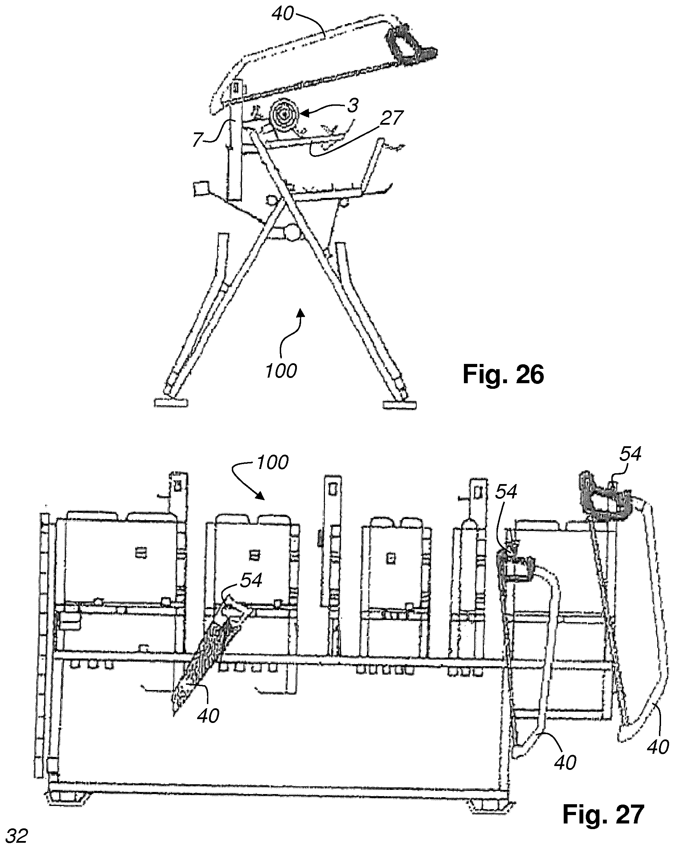

**Figur 26** zeigt, dass das Sägemittel 40 eine Handsäge ist. Die Handsäge ist in der ersten Führungsschiene 7 der Sägebank 100 geführt. Hier liegt das zu sägende Schnittgut 3 auf der Zusatzsägebank 27.

Eine Seitenansicht einer Ausführungsform der erfindungsgemäßen Sägebank 100 ist in **Figur 27** dargestellt. An der Sägebank 100 sind unterschiedliche Haltebügel 54 vorhanden, an denen die unterschiedlichen Sägemittel 40 zu Handsägen geparkt werden können. Durch die einfache Entnahme der mechanischen Handsägen ist gewährleistet, dass für die verschiedenen Holzarten immer das richtige Sägemittel 40 griffbereit ist. Die geparkten Sägemittel 40 stören den Arbeitsablauf nicht.

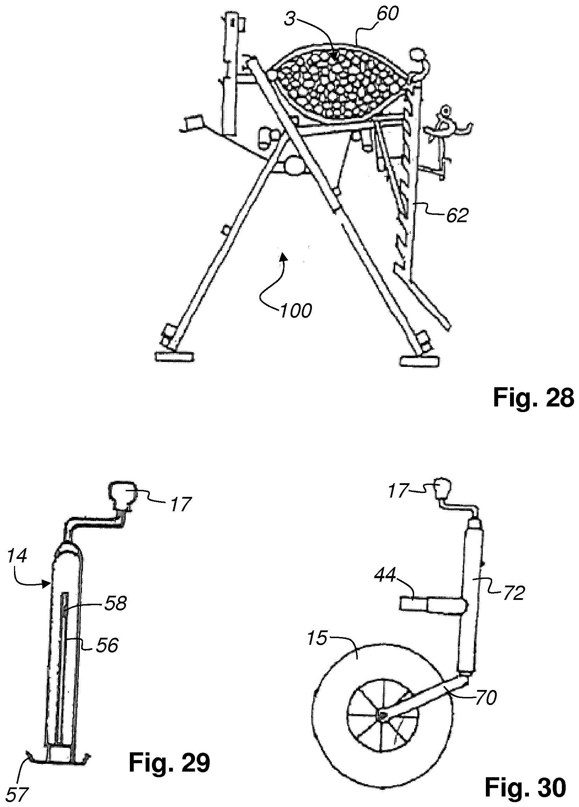

**Figur 28** zeigt eine auf der Sägebank 100 montierte Reisigpresse 60. Mit einem Rastspannhacken 62 kann das Schnittgut 3 (Reisig) zusammengepresst werden.

Eine vergrößerte Darstellung einer in der Höhe verstellbaren Bodenstütze 14 ist in **Figur 29** dargestellt. Die hier gezeigte Ausführungsform der verstellbaren Bodenstütze 14 hat einen Längsschlitz 56 ausgebildet, der in der ein Zapfen 58 gleitend geführt ist. Mit der Kurbel 17 kann die Bodenstütze 14 in der Höhe verstellt werden. Der im Längsschlitz 56 gleitende Zapfen 58 verhindert ein Verdrehen der Kufe 57 an dem der Kurbel 17 gegenüberliegenden Ende der Bodenstütze 14. Analog kann das in **Figur 30** im Detail dargestellte Laufrad 15 in der Höhe verstellt werden. Das Laufrad 15 ist über eine Gabel 70 an einer Stütze 72 montiert. Über die Kurbel 17 kann die Höhenverstellung des Laufrads 15 erreicht werden. An der Stütze 72 ist ein Zapfen 44 angebracht, mit dem das Laufrad 15 in eine Aufnahme 23 am Rahmen 8 der Sägebank 100 formschlüssig einsteckbar ist.

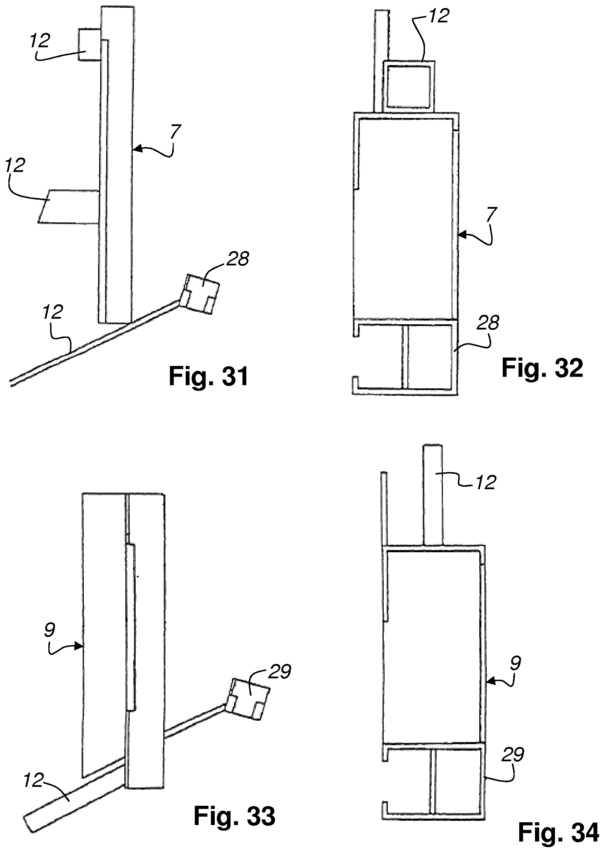

**Figur 31** und **Figur 32** zeigen verschiedene Ansichten der ersten Führungsschiene 7. Die erste Führungsschiene 7 ist mehrfach steckbar, so dass sie mit der erfindungsgemäßen Sägebank 100 verbunden werden kann. Die erste Führungsschiene 7 hat Steckverbindungen 12, über die die Anbringung an die Sägebank 100 hergestellt wird. Eine Haltegabel 28 dient zum Parken der verschiedenen Sägemittel 40.

**Figur 33** und **Figur 34** zeigen verschiedene Ansichten der zweiten Führungsschiene 9. Die zweite Führungsschiene 9 ist mehrfach steckbar, so dass sie mit der erfindungsgemäßen Sägebank 100 verbunden werden kann. Die zweite Führungsschiene 9 hat Steckverbindungen 12, über die die Anbringung an das zweite flächige Anlageelement 5 der Sägebank 100 hergestellt wird. Eine Haltegabel 29 dient zum Parken der verschiedenen Sägemittel 40.

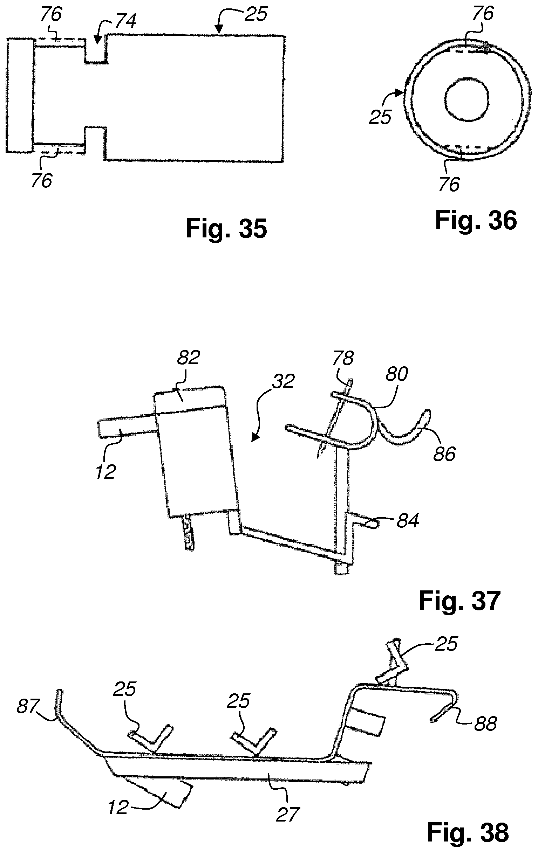

In **Figur 35** und **Figur 36** sind verschieden Ansichten des Führungsbolzens 25 dargestellt. Der Führungsbolzen 25 findet bei motorischen, hydraulischen oder pneumatischen Sägemitteln 40 Verwendung. Der Führungsbolzen 25 ist für eine gleitende Bewegung in der ersten Führungsschiene 7 oder zweiten Führungsschiene 9 ausgebildet. Hierzu hat der Führungsbolzen 25 eine radial umlaufende Kerbe 74 ausgeformt, so dass er sicher in der ersten Führungsschiene 7 oder zweiten Führungsschiene 9 sicher bewegt werden kann. Ebenso hat der Führungsbolzen 25 eine Schraubschlüsselaufnahme 76 ausgeformt, damit der Führungsbolzen 25 am Sägemittel 40 befestigt bzw. vom Sägemittel 40 abgenommen werden kann.

Eine Seitenansicht der steckbaren Wippeinrichtung 32 ist in **Figur 37** dargestellt. Die Wippeinrichtung 32 besitzt einen Wipphalter 80 für verankerte motorische, hydraulische oder pneumatische Sägemittel 40. Die Sicherung der Sägemittel im Wipphalter 80 während des Sägevorgangs erfolgt mit einem Sicherungsbolzen 78. Der Führungskanal 82 der Wippeinrichtung 32 gewährleistet kein Ausweichen der motorisch, hydraulisch oder pneumatisch betriebenen Sägemittel 40. Ein Stoppanschlag 84 begrenzt den Sägevorgang. In einen Bügelhalter 86 können motorisch, hydraulisch oder pneumatisch betätigbare Sägemittel 40 geparkt werden. Über die Steckverbindungen 12 wird die Wippeinrichtung 32 an der Sägebank 100 angebracht.

**In** **Figur 38** ist eine Seitenansicht einer einhängbaren Zusatzsägebank 27 dargestellt. Auf der Seite der Zusatzsägebank 27, auf der das Schnittgut 3 zu liegen kommt, sind Sicherungselemente 25 angebracht. Die Sicherungselemente 25 verhindern ein Verrutschen des Schnittguts 3. Die Steckverbindung 12 wird von einer entsprechenden Aufnahme 23 am Rahmen 8 der Sägebank 100 formschlüssig aufgenommen, so dass die Zusatzsägebank 27 sicher an der Sägebank 100 gehaltert ist. Ferner trägt die Zusatzsägebank 27 einen Handgriff 87 und einen Einhängebügel 88.

**Figur 39** zeigt eine Seitenansicht der Holzhaltegabel 50, die auf der Sägebank 100 mit einem Auflagerohr 90 verschraubt montiert ist. Das Schnittgut 3 ist während des Sägeprozesses sicher in der Holzhaltegabel gesichert.

**Figur 40** und **Figur 41** zeigen beispielhaft verschieden Ausführungsformen von steckbaren Holzhalterungen 42. Die hier dargestellten Holzhalterungen 42 stellen eine Auswahl dar und sollen nicht als eine Beschränkung der Erfindung aufgefasst werden. Für einen Fachmann ist es selbstverständlich, dass die Holzhalterungen 42 verschiedene Ausgestaltungen annehmen können. Entscheidend für die Erfindung ist, dass jeder der Holzhalterungen 42 mindestens einen Zapfen 44 ausgebildet hat, die mit einer entsprechenden Aufnahme 37 an der Sägebank 100 formschlüssig zusammenwirkt. Bei der in **Figur 41** gezeigten Holzhalterung 42 trägt diese ferner einen Haltebügel 54 für mechanische Sägen.

Die Erfindung wurde unter Bezugnahme auf bevorzugte Ausführungsformen beschrieben. Es ist für einen Fachmann selbstverständlich, dass Anwandlungen oder Änderungen gemacht werden können ohne den Schutzbereich der nachstehenden Ansprüche zu verlassen.

### Bezugszeichenliste:

- 2: Quertraversen
- 3: Schnittgut
- 4: erstes flächiges Anlageelement
- 5: zweites flächiges Anlageelement
- 6: Sägeschlitz
- 6S: Schnittstellen
- 7: erste Führungsschiene
- 8: Rahmen
- 8A: Aufnahmen des Rahmens
- 8E: freies Ende des Rahmens
- 9: zweite Führungsschiene
- 10: erstes Beinpaar
- 11: Beine des ersten Beinpaars
- 12: Steckverbindung
- 13: starre Bodenstützen
- 14: verstellbare Bodenstützen
- 15: Laufrad
- 17: Kurbel
- 18: Fahr-Griffe
- 19: Parkpositionen
- 20: zweites Beinpaar
- 21: Beine des zweiten Beinpaars
- 23: Aufnahmen
- 24: Anlagefläche
- 25: Sicherungselemente
- 26: Führungsbolzen
- 27: Zusatzsägebank
- 28: Haltegabel
- 29: Haltegabel
- 30: Verlängerungsmodul
- 32: Wippeinrichtung
- 33: Aufnahme
- 34: freies Ende des ersten Anlageelements
- 36: freies Ende des zweiten Anlageelements
- 37: Aufnahme
- 40: Sägemittel
- 41: Sägeblatt
- 42: Holzhalterungen
- 43: Anschlag
- 44: Zapfen
- 46: elastisches Mittel
- 48: Sicherungsbolzen
- 50: Holzghalegabel
- 52: Parkposition
- 54: Haltbügel
- 56: Längsschlitz
- 57: Kufe
- 58: Zapfen
- 60: Reisigpresse
- 62: Rastspannhacken
- 70: Gabel
- 72: Stütze
- 74: Kerbe
- 76: Schraubschlüsselaufnahme
- 78: Sicherungsbolzen
- 80: Wipphalter
- 82: Führungskanal
- 84: Stoppanschlag
- 86: Bügelhalter
- 87: Handgriff
- 88: Einhängebügel
- 90: Auflagerohr
- 100: Sägebank
- N: Niveau
- α: Winkel zwischen erstem und zweitem Anlageelement
- β: spitzen Winkel

## Patentansprüche

1. Sägebank (100) mit einem ersten Beinpaar (10) und einem zweiten Beinpaar (20), wobei zwischen dem erstem Beinpaar (10) und dem zweiten Beinpaar (20) mindestens zwei Quertraversen (2) für Schnittgut (3) angeordnet sind, wobei das erste Beinpaar (10) und das zweite Beinpaar (20) über einen Rahmen (8) starr verbunden sind, wobei
jede Quertraverse (2) aus einem ersten flächigen Anlageelement (4) und einem zweiten flächigen Anlageelement (5) besteht, wobei das erste und zweite flächige Anlageelement (4, 5) unter einem Winkel (α) zueinander angeordnet sind, wobei
ein Sägeschlitz (6) zwischen den Quertraversen (2) ausgebildet ist, **dadurch gekennzeichnet, dass**
mindestens eine erste Führungsschiene (7) und/oder mindestens eine zweite Führungsschiene (9) für ein Sägemittel (40) derart in der Sägebank (100) montiert ist, dass das Sägemittel (40) beim Sägen des Schnittguts (3) durch den Sägeschlitz (6) unterhalb eines Niveaus (N) des Schnittguts (3) auf den mindestens zwei Quertraversen (2) greift, wobei die mindestens eine erste Führungsschiene (7) an den Rahmen (8) rückwärtig zum ersten flächigen Anlageelement (4) gesteckt und gesichert ist und ein Führungsbolzen (26), der mit dem Sägemittel (40) verbunden ist, in der mindestens einen ersten Führungsschiene (7) gleitend geführt werden kann
und/oder wobei die mindestens eine zweite Führungsschiene (9) an den Rahmen (8) und in eine Aufnahme (33) an einem freien Ende (36) des zweiten flächigen Anlageelements (5) gesteckt und gesichert ist und ein Führungsbolzen (26), der mit dem Sägemittel (40) verbunden ist, in der mindestens einen zweiten Führungsschiene (9) gleitend geführt werden kann.

2. Sägebank (100) nach Anspruch 1, wobei an der ersten Führungsschiene (7) eine Haltegabel (28) angebracht ist, an der das Sägemittel (40) parkbar ist.

3. Sägebank (100) nach Anspruch 1, wobei an der zweiten Führungsschiene (9) eine Haltegabel (29) angebracht ist, an der das Sägemittel (40) parkbar ist.

4. Sägebank (100) nach Anspruch 1, wobei die mindestens eine Führungsschiene (7, 9) als Führungskanal (82) einer Wippeinrichtung (32) ausgebildet ist, die an der Sägebank (100) angebracht ist.

5. Sägebank (100) nach Anspruch 4, wobei die Wippeinrichtung (32) am Rahmen (8) und in einer Aufnahme (33) an einem freien Ende (36) des zweiten flächigen Anlageelements (5) steckbar und sicherbar ist, und dass an der Wippeinrichtung (32) eine Haltegabel (29) angebracht ist, an der das Sägemittel (40) parkbar ist.

6. Sägebank (100) nach einem der Ansprüche 4 oder 5, wobei die Wippeinrichtung (32) am Rahmen (8) gegenüber einer ersten Führungsschiene (7) oder gegenüber einer zweiten Führungsschiene (9) angebracht ist.

7. Sägebank (100) nach den vorangehenden Ansprüchen, **wobei** die Beine (11) des ersten Beinpaars (10) und die Beine (21) des zweiten Beinpaars (20) jeweils derart miteinander starr verbunden sind, dass die Beine (11, 21) eines jeden Beinpaares (10, 20) einen spitzen Winkel (β) einschließen und die beiden Beinpaare (10, 20), sowie die Quertraversen (2) für das Schnittgut (3), starr an einem Rahmen (8) befestigt sind.

8. Sägebank (100) nach den vorangehenden Ansprüchen, **wobei** mindestens ein Verlängerungsmodul (30) mit dem Rahmen (8) der Sägebank (100) lösbar verbindbar ist

9. Sägebank (100) nach den vorangehenden Ansprüchen, **wobei** ein Laufrad (15) an die Sägebank (100) ansteckbar ist und das Laufrad (15) über eine Kurbel (17) mechanisch in der Höhe verstellbar ist.

10. Sägebank (100) nach Anspruch 9, **wobei** zwei Fahrgriffe (18) in entsprechenden Aufnahmen (23) am Rahmen (8) für beide Fahrtrichtungen einsteckbar sind.

11. Sägebank (100) nach Anspruch 10, **wobei** jeder Fahrgriff (18) in eine entsprechende Parkposition (19) am Rahmen (8) einsetzbar ist.

12. Sägebank (100) nach den vorangehenden Ansprüchen, **wobei** am ersten flächigen Anlageelement (4) und am zweiten flächigen Anlageelement (5) auf einer Anlagefläche (24) für das Schnittgut (3) jeweils mehrere Sicherungselemente (25) angebracht sind, damit ein Verrutschen des Schnittguts (3) verhinderbar ist.

13. Sägebank (100) nach Anspruch 1, **wobei** an einem freien Ende (34) des ersten Anlageelements (4) und/oder an einem freien Ende (36) des zweiten flächigen Anlageelements (5) jeweils mindestens eine Aufnahme (37) angebracht ist, in die die Holzhalterungen (42) steckbar sind.

14. Sägebank (100) nach Anspruch 13, **wobei** jede Holzhalterung (42) mindestens einen Zapfen (44) ausgeformt hat, der zum Anbringen der Holzhalterung (42) formschlüssig in die Aufnahme (37) greift.

## Claims

1. Saw bench (100) having a first pair of legs (10) and a second pair of legs (20), wherein at least two crossbars (2) for cut material (3) are arranged between the first pair of legs (10) and the second pair of legs (20), wherein the first pair of legs (10) and the second pair of legs (20) are rigidly connected via a frame (8), wherein
- each crossbar (2) consists of a first flat bearing element (4) and a second flat bearing element (5), wherein the first and second flat bearing elements (4, 5) are arranged at an angle (a) to one another, wherein
- a saw slot (6) is formed between the crossbars (2),
**characterized in that**
- at least one first guide rail (7) and/or at least one second guide rail (9) for a sawing means (40) is mounted in the saw bench (100) in such a way that the sawing means (40) engages below a level (N) of the cut material (3) on the at least two crossbars (2) when sawing the cut material (3) through the saw slot (6), wherein the at least one first guide rail (7) is inserted and secured on the frame (8) at the rear in relation to the first flat bearing element (4), and a guide bolt (26), which is connected to the sawing means (40), can be slidably guided in the at least one first guide rail (7), and/or wherein the at least one second guide rail (9) is inserted and secured to the frame (8) and in a receptacle (33) at a free end (36) of the second flat bearing element (5), and a guide bolt (26), which is connected to the sawing means (40), can be slidably guided in the at least one second guide rail (9).

2. Saw bench (100) according to claim 1, wherein a retaining fork (28), on which the sawing means (40) can be parked, is attached to the first guide rail (7).

3. Saw bench (100) according to claim 1, wherein a retaining fork (29), on which the sawing means (40) can be parked, is attached to the second guide rail (9).

4. Saw bench (100) according to claim 1, wherein the at least one guide rail (7, 9) is formed as a guide channel (82) of a rocker device (32) which is attached to the saw bench (100).

5. Saw bench (100) according to claim 4, wherein the rocker device (32) can be plugged and secured on the frame (8) and in a receptacle (33) at a free end (36) of the second flat bearing element (5), and wherein a retaining fork (29), on which the sawing means (40) can be parked, is attached to the rocker device (32).

6. Saw bench (100) according to one of claims 4 or 5, wherein the rocker device (32) is attached to the frame (8) opposite a first guide rail (7) or opposite a second guide rail (9).

7. Saw bench (100) according to any of the preceding claims, wherein the legs (11) of the first pair of legs (10) and the legs (21) of the second pair of legs (20) are each rigidly connected to one another in such a way that the legs (11, 21) of each pair of legs (10, 20) enclose an acute angle (β), and the two pairs of legs (10, 20), as well as the crossbars (2) for the cut material (3), are rigidly attached to a frame (8).

8. Saw bench (100) according to any of the preceding claims, wherein at least one extension module (30) is detachably connectable to the frame (8) of the saw bench (100)

9. Saw bench (100) according to any of the preceding claims, wherein a running wheel (15) can be attached to the saw bench (100) and the running wheel (15) is mechanically adjustable in height by means of a crank (17).

10. Saw bench (100) according to claim 9, wherein two drive handles (18) can be inserted into corresponding receptacles (23) on the frame (8) for both directions of travel.

11. Saw bench (100) according to claim 10, wherein each drive handle (18) can be inserted into a corresponding parking position (19) on the frame (8).

12. Saw bench (100) according to any of the preceding claims, wherein a plurality of securing elements (25) are attached in each case on the first flat bearing element (4) and on the second flat bearing element (5) on a contact surface (24) for the cut material (3), so that slippage of the cut material (3) can be prevented.

13. Saw bench (100) according to claim 1, wherein at least one receptacle (37), into which the wood retainers (42) can be inserted, is attached in each case at a free end (34) of the first bearing element (4) and/or at a free end (36) of the second flat bearing element (5).

14. Saw bench (100) according to claim 13, wherein each wood retainer (42) has formed at least one pin (44) which engages in the receptacle (37) in a form-fitting manner for mounting the wood retainer (42).

## Revendications

1. Banc de scie (100) comportant une première paire de pieds (10) et une deuxième paire de pieds (20), au moins deux traverses (2) pour le matériau à couper (3) étant disposées entre la première paire de pieds (10) et la deuxième paire de pieds (20), la première paire de pieds (10) et la deuxième paire de pieds (20) étant reliées de manière rigide par un cadre (8),
chaque traverse (2) étant constituée d'un premier élément d'appui plan (4) et d'un deuxième élément d'appui plan (5), les premier et deuxième éléments d'appui plans (4, 5) étant disposés selon un angle (α) l'un par rapport à l'autre,
une fente de sciage (6) étant formée entre les traverses (2),
**caractérisé en ce qu'**au moins un premier rail de guidage (7) et/ou au moins un deuxième rail de guidage (9) pour un moyen de sciage (40) sont montés dans le banc de scie (100) de telle sorte que, lors du sciage du matériau à couper (3), le moyen de sciage (40) s'engage à travers la fente de sciage (6) en dessous d'un niveau (N) du matériau à couper (3) sur lesdites au moins deux traverses (2), ledit au moins un premier rail de guidage (7) étant emboîté et fixé sur le cadre (8) par l'arrière par rapport au premier élément d'appui plan (4), et un goujon de guidage (26) qui est relié au moyen de sciage (40) pouvant être guidé de manière coulissante dans ledit au moins un premier rail de guidage (7),
et/ou ledit au moins un deuxième rail de guidage (9) étant emboîté et fixé sur le cadre (8) et dans un logement (33) à une extrémité libre (36) du deuxième élément d'appui plan (5), et un goujon de guidage (26) qui est relié au moyen de sciage (40) pouvant être guidé de manière coulissante dans ledit au moins un deuxième rail de guidage (9).

2. Banc de scie (100) selon la revendication 1, dans lequel une fourche de maintien (28), sur laquelle le moyen de scie (40) peut être garé, est montée sur le premier rail de guidage (7).

3. Banc de scie (100) selon la revendication 1, dans lequel une fourche de maintien (29), sur laquelle le moyen de scie (40) peut être garé, est montée sur le deuxième rail de guidage (9).

4. Banc de scie (100) selon la revendication 1, dans lequel ledit au moins un rail de guidage (7, 9) est réalisé sous la forme d'un canal de guidage (82) d'un dispositif à bascule (32) qui est monté sur le banc de scie (100).

5. Banc de scie (100) selon la revendication 4, dans lequel le dispositif à bascule (32) peut être emboîté et fixé sur le cadre (8) et dans un logement (33) à une extrémité libre (36) du deuxième élément d'appui plan (5), et dans lequel une fourche de maintien (29), sur laquelle le moyen de sciage (40) peut être garé, est montée sur le dispositif à bascule (32).

6. Banc de scie (100) selon l'une des revendications 4 ou 5, dans lequel le dispositif à bascule (32) est monté sur le cadre (8) en face d'un premier rail de guidage (7) ou en face d'un deuxième rail de guidage (9).

7. Banc de scie (100) selon les revendications précédentes, dans lequel les pieds (11) de la première paire de pieds (10) et les pieds (21) de la deuxième paire de pieds (20) sont reliés rigidement l'un à l'autre de telle sorte que les pieds (11, 21) de chaque paire de pieds (10, 20) forment un angle aigu (β), et les deux paires de pieds (10, 20) ainsi que les traverses (2) pour le matériau à couper (3) sont fixées de manière rigide à un cadre (8).

8. Banc de scie (100) selon les revendications précédentes, dans lequel au moins un module prolongateur (30) peut être relié de manière amovible au cadre (8) du banc de scie (100).

9. Banc de scie (100) selon les revendications précédentes, dans lequel une roue (15) peut être fixée au banc de scie (100) et la hauteur de la roue (15) est réglable mécaniquement au moyen d'une manivelle (17).

10. Banc de scie (100) selon la revendication 9, dans lequel deux poignées (18) peuvent être insérées dans des logements correspondants (23) sur le cadre (8) pour les deux sens de déplacement.

11. Banc de scie (100) selon la revendication 10, dans lequel chaque poignée (18) peut être placée dans une position de parcage correspondante (19) sur le cadre (8).

12. Banc de scie (100) selon les revendications précédentes, dans lequel plusieurs éléments de fixation (25) sont montés chaque fois sur une surface d'appui (24) pour le matériau à couper (3) sur le premier élément d'appui plan (4) et sur le deuxième élément d'appui plan (5) afin d'empêcher le matériau à couper (3) de glisser.

13. Banc de scie (100) selon la revendication 1, dans lequel à une extrémité libre (34) du premier élément d'appui (4) et/ou à une extrémité libre (36) du deuxième élément d'appui plan (5) est chaque fois monté au moins un logement (37) dans lequel des moyens de maintien de bois (42) peuvent être emboîtés.

14. Banc de scie (100) selon la revendication 13, dans lequel sur chaque moyen de maintien de bois (42) est formé au moins un tenon (44) qui s'engage par complémentarité de forme dans le logement (37) pour monter le moyen de maintien de bois (42).
